(19) **Europäisches Patentamt European Patent Office Office européen des brevets**

(11) **EP 4 721 959 A1**

(12) **EUROPEAN PATENT APPLICATION**

(43) Date of publication:
08.04.2026 Bulletin 2026/15

(21) Application number: 24383059.3

(22) Date of filing: 01.10.2024

(51) International Patent Classification (IPC):
*B29C 70/44* (2006.01)   *B29C 70/54* (2006.01)
*B29C 65/18* (2006.01)   *B29C 65/00* (2006.01)
*B29C 65/78* (2006.01)   *B29C 43/36* (2006.01)

(52) Cooperative Patent Classification (CPC):
**B29C 70/44; B29C 65/18; B29C 65/7802;**
**B29C 66/1122; B29C 66/43121; B29C 66/8362;**
**B29C 70/544;** B29C 2043/3644

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Airbus Operations, S.L.U.**
**28906 Getafe, Madrid (ES)**

(72) Inventors:
• **SUAREZ TORRENTS, Carlos**
**28906 GETAFE (Madrid) (ES)**
• **PALOS RIVAS, Sebastián**
**28906 GETAFE (Madrid) (ES)**

(74) Representative: **Herrero & Asociados, S.L.**
**Edificio Aqua - Calle Agustín de Foxá, 4-10, 2ºA**
**28036 Madrid (ES)**

(54) **SEALING SYSTEM AND METHOD FOR CLOSING VACUUM BAGS**

(57)     The sealing system comprises a guide (1) that guides a pair of layers (2) and sealing rollers (3) that apply heat and pressure to an edge of the layers (2) for sealing the layers (2) to each other, said sealing rollers (3) being movable along said edge.

The sealing method comprises aligning a pair of layers (2) so that a portion of one of the layers (2) is placed in front of a portion of the other layer (2), defining an edge; applying heat and pressure to said edge of the layers (2) by heating rollers (3); and moving said heating rollers (3) along the edge of the layers (2), sealing both layers (2) to each other at said edge, forming a vacuum bag.

It permits to solve the problem of labor-intensive sealing methods by introducing an automated sealing system that uses a zipper-like approach for vacuum bag closure.

FIG. 1

## Description

The present invention relates to a sealing system and method for closing vacuum bags, in particular, in the field of aerospace manufacturing, specifically for sealing of vacuum bags used in the manufacturing process of aircraft composite parts, such as wing covers, and other potential parts where a vacuum bag in direct contact with the composite part is used.

## Background of the invention

Some components of an aircraft are composite parts that are manufactured using vacuum bags that are placed in direct contact with the composite part. Examples of this kind of composite parts include wing covers and stringers, among others.

Current methods for sealing vacuum bags in aircraft composite parts manufacturing imply the use of sealant tape. This tape is manually checked and corrected during the integration of the composite parts, such as stringers, requiring operators to climb onto the cover and kneel among numerous caul plates.

These traditional methods not only pose safety risks for the operators but also rely heavily on manual labor, limiting the potential for automation.

Additionally, the auxiliary materials used in these methods often adhere to the part during an autoclave process, leading to defects and increasing the need for deburring and repairs.

The inability to automate the sealing process effectively impacts both the safety and efficiency of the overall manufacturing process.

## Description of the invention

Therefore, an objective of the present invention is to provide a sealing system and method that solves the problem of labor-intensive sealing methods by introducing an automated sealing system that uses a zipper-like approach for vacuum bag closure.

The sealing system and method of the invention solves the above-mentioned disadvantages and has other advantages which will be described below.

The sealing system and method according to the present invention are described in the corresponding independent claims, and the dependent claims include additional features that are optional.

In particular, the sealing system for closing vacuum bags comprises:

- a guide that guides a pair of layers that form the vacuum bag; and
- sealing rollers that apply heat and pressure to an edge of the layers for sealing the layers to each other, forming the vacuum bag, said sealing rollers being movable along said edge.

Preferably, the sealing system according to the present invention also comprises a support that holds the sealing rollers.

Furthermore, the sealing system can also comprise a control module that controls the temperature and pressure applied to the edge of the layers by the heating rollers, and the speed of the heating rollers along said edge.

Preferably, the sealing system for closing vacuum bags according to the present invention can also comprise an injection nozzle that injects a gas into the vacuum bag formed by the layers.

According to a second aspect, the sealing method for closing vacuum bags comprises the following steps:

- aligning a pair of layers so that a portion of one of the layers is placed in front of a portion of the other layer, defining an edge;
- applying heat and pressure to said edge of the layers by heating rollers; and
- moving said heating rollers along the edge of the layers, sealing both layers to each other at said edge, forming a vacuum bag.

Furthermore, the method also comprises preferably a step of setting the temperature, pressure and speed of the heating rollers before applying heat and pressure and moving said heating rollers.

The sealing method for closing vacuum bags according to the present invention can also comprise a step of testing the vacuum bag formed, e.g. injecting a gas inside the vacuum bag.

Furthermore, the method also comprises preferably a step of placing the layers on at least one aircraft composite part.

The sealing system and method according to the present invention ensure a consistent and secure seal of the vacuum bags, reducing the need for operators to perform manual corrections on the manufacturing cradles.

Therefore, the sealing system and method according to the present invention provide at least the following advantages:

- Increased Efficiency: The sealing process is faster compared to manual methods.

- Health & Safety Improvements: Eliminates the need for operators to perform tasks on the manufacturing cradles of covers, enhancing their safety.

- Material Savings: Eliminates the use of auxiliary materials like sealant tape, preventing it from adhering to the part during autoclaving, thus reducing defects in deburring and minimizing non-conformities and repairs, which leads to improvements in quality and cost savings.

## Brief description of the drawings

For a better understanding of what has been explained above, some drawings are included in which, schematically and only by way of a non-limiting example, a practical case of embodiment is represented.

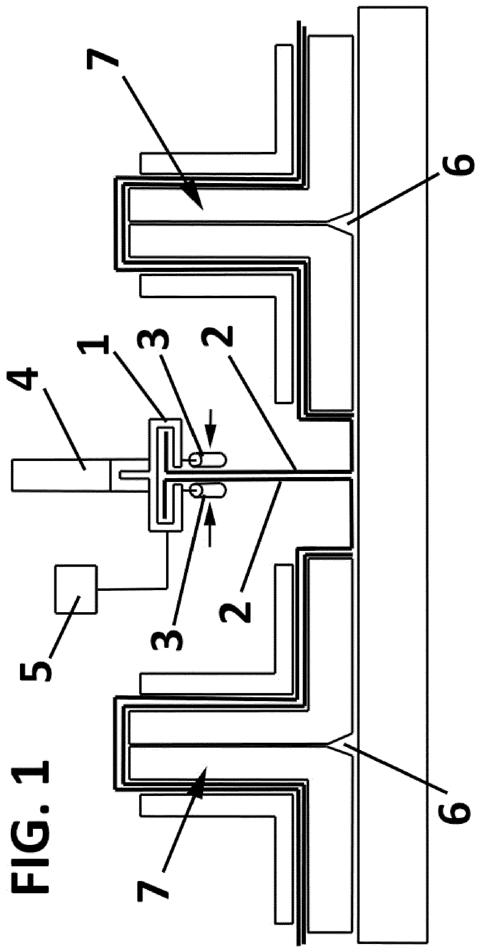

Figure 1 is a diagrammatical view of the sealing system according to the present invention, in particular for sealing vacuum bags during the manufacture of aircraft stringers.

## Description of a preferred embodiment

Figure 1 shows a diagrammatical view of the sealing system according to the present invention, in particular for sealing vacuum bags during the manufacture of two adjacent aircraft stringers.

The sealing system according to the present invention is designed for the closure of vacuum bags used in composite material manufacturing, such as aircraft composite parts.

The sealing system ensures a consistent and secure seal lifting, aligning, and sealing a vacuum bag of two adjacent stringers.

The sealing system comprises a guide 1 that lifts and aligns two layers 2, e.g. of nylon film, that form the vacuum bag, to ensure they are properly positioned for sealing, and heating rollers 3 that are positioned immediately after the guide 1. These heating rollers 3 apply precise heat and pressure to seal the layers 2 together.

The sealing system also comprises a support 4, that is a framework that holds the heating rollers 3 and allows for adjustments to ensure consistent sealing pressure and alignment.

Furthermore, the sealing system also comprises motors and rails, not shown in the drawing, that control the movement of the heating rollers 3 along the edge of the layers 2, preferably at a constant speed.

The sealing system also includes a control module 5, that monitors and adjusts the temperature, pressure, and speed of the sealing process, i.e., of the heating rollers 3 to maintain optimal conditions. The unravelling of the vacuum bag formed by the layers 2 is also preferably controlled.

The sealing system is preferably used with nylon layers, but it can also be used with layers of any other suitable material.

An example of the sealing method according to the present invention is now described, for example, for sealing a vacuum bag for an aircraft wing lower cover or between two adjacent stringers 7, as shown in Fig. 1.

First, it is carried out a preparation step, in which the layers 2 to be sealed are positioned on the composite parts to be bagged with the vacuum bag, and the system parameters such as the temperature, pressure and speed of the heating rollers 3 are set.

Then, the guide 1 lifts and aligns the layers 2 with the heating rollers 3 in a root joint section, preparing them for sealing.

Once aligned, the sealing is carried out, moving the layers 2, so that the heating rollers 3 apply heat, for example, at approximately 185 °C, and pressure, creating a secure seal.

Finally, vacuum tests are conducted to ensure the integrity of the seal, injecting a gas, e.g., helium, by an injection nozzle 6, between the layers 2 forming the vacuum bag and the stringers 7, according to the shown embodiment.

The sealing system is designed to handle the typical thickness of nylon layers used in vacuum bagging. For instance, an initial thickness may be reduced during the sealing process, ensuring no porosity or the formation of holes form.

Hereinafter, a further explanation with respect to nylon layers is provided.

When thermoplastic materials like nylon are heat-sealed, they behave as viscous fluids.

The mass of the material before and after the sealing process remains constant. The mass is a product of density ($\rho$), area (A), and thickness (h):

$$\rho \cdot A_{initial} \cdot h_{initial} = \rho \cdot A_{final} \cdot h_{final}$$

Assuming constant density and area, the equation simplifies to:

$$A_{initial} \cdot h_{initial} = A_{final} \cdot h_{final}$$

The deformation in thickness is due to the viscous flow of the material under heat and pressure. According to Newton's law of viscosity:

$$-r = \mu \cdot (dy/du)$$

Where:

- -r is the shear stress.
- $\mu$ is the dynamic viscosity.
- (dy/du) is the velocity gradient perpendicular to the direction of shear.

The applied pressure (P) directly influences the shear stress (-r) applied to the material. Higher pressure increases the stress, leading to greater deformation and thinning of the material.

The sealing temperature (T) affects the viscosity ($\mu$) of the material. As temperature increases, viscosity decreases, allowing the material to flow more easily under pressure $\rightarrow \mu(T)$.

To derive a formula considering pressure and temperature, we start with the relationship between shear stress and pressure:

$$-r = P$$

Assuming a steady-state flow and using the conservation of mass:

$$h_{final} = h_{initial}/(1 + (P \cdot t)/\mu$$

Where:

- t is the time under pressure.
- $\mu(T)$ is the viscosity at temperature T.

**Claims**

1. Sealing system for closing vacuum bags, comprising:

   - a guide (1) that guides a pair of layers (2) that form the vacuum bag; and
   - sealing rollers (3) that apply heat and pressure to an edge of the layers (2) for sealing the layers (2) to each other, forming the vacuum bag, said sealing rollers (3) being movable along said edge.

2. Sealing system for closing vacuum bags according to claim 1, wherein the sealing system also comprises a support (4) that holds the sealing rollers (3).

3. Sealing system for closing vacuum bags according to claim 1 or 2, wherein the sealing system also comprises a control module (5) that controls the temperature and pressure applied to the edge of the layers (2) by the heating rollers (3), and the speed of the heating rollers (3) along said edge.

4. Sealing system for closing vacuum bags according to anyone for the previous claims, wherein the sealing system also comprises an injection nozzle (6) that injects a gas into the vacuum bag formed by the layers (2).

5. Sealing method for closing vacuum bags, comprising the following steps:

   - aligning a pair of layers (2) so that a portion of one of the layers (2) is placed in front of a portion of the other layer (2), defining an edge;
   - applying heat and pressure to said edge of the layers (2) by heating rollers (3); and
   - moving said heating rollers (3) along the edge of the layers (2), sealing both layers (2) to each other at said edge, forming a vacuum bag.

6. Sealing method for closing vacuum bags according to claim 5, wherein the method also comprises a step of setting the temperature, pressure and speed of the heating rollers (3) before applying heat and pressure and moving said heating rollers (3).

7. Sealing method for closing vacuum bags according to claim 5 or 6, wherein the method also comprises a step of testing the vacuum bag formed.

8. Sealing method for closing vacuum bags according to claim 7, wherein said testing step comprising injecting a gas inside the vacuum bag.

9. Sealing method for closing vacuum bags according to anyone of claims 5-8, wherein the method also comprises a step of placing the layers (2) on at least one aircraft composite part.

FIG. 1

## EUROPEAN SEARCH REPORT

**Application Number**

EP 24 38 3059

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 654 043 A (JACOBI WILLIAM I) 4 April 1972 (1972-04-04) | 1-3,5,6, 9 | INV.<br>B29C70/44 |
| A | * column 1, line 2 - line 25 * | 4,7,8 | B29C70/54 |
| | * column 1, line 69 - column 4, line 57 * | | B29C65/18 |
| | * figures * | | B29C65/00 |
| | ----- | | B29C65/78 |
| A | US 2015/273809 A1 (THOMAS CHARLES WILLIAM [US] ET AL) 1 October 2015 (2015-10-01) | 1-9 | |
| | * paragraph [0001] - paragraph [0004] * | | ADD. |
| | * paragraph [0019] - paragraph [0035] * | | B29C43/36 |
| | * figures 1-6 * | | |
| | ----- | | |
| A | US 2020/061939 A1 (LEE MICHAEL A [US] ET AL) 27 February 2020 (2020-02-27) | 1-9 | |
| | * paragraph [0001] - paragraph [0002] * | | |
| | * paragraph [0083] - paragraph [0086] * | | |
| | * figure 8 * | | |
| | ----- | | |

**TECHNICAL FIELDS SEARCHED (IPC)**

B29C

The present search report has been drawn up for all claims

| Place of search | Date of completion of the search | Examiner |
|---|---|---|
| The Hague | 20 February 2025 | Fageot, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 3059

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| US 3654043 | A | 04-04-1972 | NONE | | |
| US 2015273809 | A1 | 01-10-2015 | NONE | | |
| US 2020061939 | A1 | 27-02-2020 | CN | 110856986 A | 03-03-2020 |
| | | | EP | 3613567 A1 | 26-02-2020 |
| | | | JP | 7355529 B2 | 03-10-2023 |
| | | | JP | 2020029088 A | 27-02-2020 |
| | | | US | 2020061939 A1 | 27-02-2020 |

EPO FORM P0459

For more details about this annex : see Official Journal of the European Patent Office, No. 12/82